# EUROPÄISCHE PATENTSCHRIFT

(11) **EP 1 687 099 B1**
(45) Veröffentlichungstag und Bekanntmachung des Hinweises auf die Patenterteilung: **16.01.2008**
(21) Anmeldenummer: 04797576.8
(22) Anmeldetag: 04.11.2004
(51) Int. Cl.: B05C 1/08, B05C 11/04

(54) **DOSIERVORRICHTUNG SOWIE VORRICHTUNG ZUM AUFTRAGEN VON KLEBEMITTELN AUF ZUMINDEST EINER DOSIERVORRICHTUNG SOWIE SUBSTRATBAHN**
DOSING DEVICE, APPARATUS FOR APPLYING ADHESIVES TO AT LEAST ONE DOSING DEVICE, AND SUBSTRATE WEB
DISPOSITIF DOSEUR, DISPOSITIF POUR APPLIQUER DES ADHESIFS SUR AU MOINS UN DISPOSITIF DOSEUR ET BANDE DE SUPPORT

(30) Priorität: 19.11.2003 DE 10354153
(43) Veröffentlichungstag der Anmeldung: 09.08.2006
(73) Patentinhaber: Kiener Maschinenbau GmbH, 73466 Lauchheim (DE)
(72) Erfinder: KIENER, Waldemar, 73466 Lauchheim (DE); REIN, Johann, 73441 Bopfingen (DE)
(74) Vertreter: Maser, Jochen
(86) Internationale Anmeldenummer: PCT/EP2004/012445
(87) Internationale Veröffentlichungsnummer: WO 2005/049223

(56) Entgegenhaltungen:
- EP-A- 0 478 534
- EP-A- 1 410 849
- DE-A1- 1 918 137
- DE-U1- 9 315 499
- GB-A- 368 409
- US-A- 5 609 920

## Beschreibung

Die Erfindung betrifft eine Dosiervorrichtung sowie eine Vorrichtung zum Auftragen von Klebemitteln auf zumindest eine Substratbahn.

Aus der DE 296 12 052 U1 geht eine Vorrichtung zur Nassbeschichtung, insbesondere von Leiterplatten mit Lack, hervor. Diese Vorrichtung umfasst eine Auftragswalze sowie eine Dosierwalze, die zusammenarbeiten und zwischen deren oberen Abschnitten ein Lacksumpf gebildet ist. Zum Auftragen des Lackes sind bogenförmige Abstreiferkanten an einem Abstreifer vorgesehen, die an einer separaten Rakeleinrichtung angeordnet sind und durch eine Zustellbewegung in X- und Y-Richtung an den Auftragswalzen anstellbar sind.

Die Rakeleinrichtung ist in der Positionierung fest den Auftragswalzen zugeordnet, so dass eine Auswahl von mehreren Wirkbereichen zur Einstellung des Auftrages nicht möglich ist.

Aus der DE 101 57 366 A1 geht eine Vorrichtung zum Laminieren oder Beschichten eines Substrates hervor, bei der ein Mehrwalzensystem, bestehend aus einer Dosierwalze, einer Auftragswalze und einer Gegendruckwalze vorgesehen ist. Über die Dosierwalze wird ein Klebemittel auf die Auftragswalze aufgetragen. Der Klebemittelfilm auf der Auftragswalze wird auf eine Substratbahn übertragen, welche einem zwischen der Auftragswalze und Gegendruckwalze gebildeten Spalt zugeführt wird. Diese beschichtete Substratbahn kann zur Weiterverarbeitung abgeführt werden oder beispielsweise mit einer weiteren Substratbahn über eine Laminierwalze, welche der Gegendruckwalze zugeordnet ist, laminiert werden. Zur Einstellung der Dicke des Klebemittelfilmes ist vorgesehen, dass die Dosierwalze zur Auftragswalze verfahrbar ist. Somit kann die Dicke des aufzutragenden Klebemittelfilms eingestellt werden.

Die Anforderungen an die Flexibilität von Vorrichtung zum Beschichten oder Laminieren von Substratbahnen steigt stetig an. Diese Anforderungen sind bestimmt durch die unterschiedlichen Materialstrukturen, die zum Beschichten oder zum Laminieren mit einer weiteren Substratbahn vorgesehen sind. Darüber hinaus ist auch eine Anpassung des Klebemittelauftrages sowie der Art des Klebemittels an die Materialstrukturen von zumindest einer Substratbahn erforderlich, um eine gewünschte Beschichtung oder sichere Verbindung zwischen zumindest zwei Substratschichten zu erzielen.

Der Erfindung liegt deshalb die Aufgabe zugrunde, eine Dosiervorrichtung beispielsweise gemäß DE-93 15 499 U1 sowie eine entsprechende Vorrichtung zum Auftragen von Klebstoff auf zumindest eine Substratbahn weiterzubilden, welche eine schnelle und einfache Einstellung und Umrüstung zumindest auf verschiedene Arten von Klebemittel oder verschiedene Applikationsstrukturen des Klebemittels ermöglichen.

Diese Aufgabe wird erfindungsgemäß durch die Dosiervorrichtung gemäß den Merkmalen des Anspruchs 1 und einer Vorrichtung zum Auftragen von Klebstoff auf zumindest eine Substratbahn gemäß dem Anspruch 13 gelöst.

Durch die erfindungsgemäße Ausgestaltung der Dosiervorrichtung, welche zumindest zwei voneinander abweichende Bereiche umfasst, die wahlweise einem Dosierspalt zugeordnet werden können, um mit diesem einen Dosierspalt auszubilden, wird eine einfache und schnelle Einstellung der Dosiervorrichtung zur Applikationswalze beziehungsweise Auftragswalze ermöglicht, um verschiedene Applikationsstrukturen auf die zumindest eine Substratbahn aufzubringen und/oder verschiedene Klebemittel auf die Auftragswalze zu applizieren. Da die Dosiervorrichtung zumindest zwei voneinander abweichenden Bereiche aufweist, kann eine Einstellung und Umrüstung erfolgen, ohne dass ein vollständiger Austausch der Dosiervorrichtung erforderlich ist. Die Rüstzeiten werden erheblich minimiert. Gleichzeitig entfallen auch Aufwendungen für die Bevorratung von mehreren Dosiervorrichtungen, um unterschiedliche Klebemittel zu verarbeiten und/oder Applikationsstrukturen aufzubringen.

Durch diese erfindungsgemäße Dosiervorrichtung sind beispielsweise vollflächige Beschichtungen, vollflächige Beschichtungen und Oberflächenstrukturen, offenporige Beschichtungen, wie beispielsweise sogenannte Open-Coating-Structures, sowie offenporige Beschichtungen mit Oberflächenstrukturen ermöglicht. Dadurch ist die Flexibilität dieser Dosiervorrichtung wesentlich erhöht, und es können eine Vielzahl von unterschiedlichen oder mehreren nebeneinander angeordneten Substratbahnen mit dem speziell dafür vorgesehenen Klebemittel beschichtet und/oder mit weiteren Substratbahnen laminiert werden.

Erfindungsgemäß ist vorgesehen, dass durch Drehen der Dosiervorrichtung, vorzugsweise um deren Längsachse, zumindest zwei Bereiche wahlweise einstellbar sind und dem Dosierspalt zugeordnet werden können. Dadurch wird eine schnelle Umrüstung ermöglicht. Diese drehbare Anordnung der Dosiervorrichtung kann unabhängig von der Einstellung eines Dosierspaltes von der Dosiervorrichtung zur Auftragswalze erfolgen. Vorteilhafterweise werden sowohl die Breite des Dosierspaltes als auch die Zuordnung des zumindest einen Bereiches der Dosiervorrichtung zum Dosierspalt aufeinander abgestimmt.

Zum Auftragen des Klebemittels auf die Auftragswalze weist die Dosiervorrichtung zumindest einen Bereich auf, der durch ein Rakel ausgebildet ist. Das Rakel ragt zumindest teilweise in den Dosierspalt und ermöglicht verschiedene Einstellungen im Dosierspalt.

Die Dosiervorrichtung weist zumindest einen weiteren Bereich auf. Vorteilhafterweise ist dies ein Außenflächenbereich, der insbesondere durch eine Umfangsfläche oder einen Umfangswandabschnitt gebildet ist. Diese Umfangsfläche ist bevorzugt zumindest als Kreissegment ausgebildet, so dass bei einer Anordnung dieses Bereiches zur Auftragswalze ein Dosierspalt durch zwei einander gegenüberliegende Kreissegmente gebildet wird.

Nach einer weiteren vorteilhaften Ausgestaltung der Erfindung ist vorgesehen, dass wenigstens eine glatte oder strukturierte Wirkfläche an einer Kante des Rakels, an dem Außenflächenbereich und der Oberfläche der Auftragswalze wahlweise vorgesehen ist. Dadurch können neben einem vollflächigen Klebefilm auch unterschiedliche Oberflächestrukturen geschaffen werden. Beispielsweise kann die Auftragswalze eine Struktur aufweisen, die zum Auftragen von einzelnen Klebemittelpunkten für eine offene Beschichtungsstruktur vorgesehen ist. Durch Zuordnung einer glatten Wirkfläche der Dosiervorrichtung kann beispielsweise auf einem Klebemittelfilm variabler Dicke zusätzlich die punktförmige Struktur gegeben sein. Alternativ kann auch eine strukturierte Wirkfläche an dem zumindest einen weiteren Bereich vorgesehen sein, so dass beispielsweise die punktförmige Strukturierung der Auftragswalze mit der strukturierten Wirkfläche des zumindest einen weiteren Bereich überlagert wird. In Abhängigkeit der Einstellung der Spaltbreite kann dazwischen ein Klebemittelfilm vorgesehen sein. Analoges gilt auch für den zumindest einen Bereich, der bevorzugt als Rakel ausgebildet ist. Das Rakel kann eine durchgehende Abziehkante aufweisen oder eine strukturierte Abziehkante oder bereichsweise eine strukturierte oder durchgehende Abziehkante aufweisen, so dass verschiedene Applikationsstrukturen des Klebemittels auf die Auftragswalze aufgebracht werden können. Eine beliebige Kombination der einzelnen glatten oder strukturierten Wirkflächen an den einander zugeordneten Komponenten im Dosierspalt ist möglich. Zudem können auch mehrere unterschiedliche Bereiche auf der Dosiervorrichtung vorgesehen sein, wie beispielsweise eine glatte oder strukturierte Wirkfläche am Außenumfang der Dosiervorrichtung und/oder ein Rakel mit einer durchgehenden Abziehkante und/oder einem Rakel mit einer weiteren strukturierten Abziehkante, so dass in diesem Ausführungsbeispiel fünf verschiedene Einstellungen zur Auftragswalze ermöglicht sind. Die Anzahl der unterschiedlichen Wirkflächen beziehungsweise Bereiche ist nicht auf dieses Beispiel beschränkt.

Nach einer vorteilhaften Ausgestaltung der Erfindung ist vorgesehen, dass die Umlaufgeschwindigkeiten von Auftragswalze und Gegenwalze gleich oder ungleich sind. Die Rotationsgeschwindigkeit der Auftragswalze und die der Gegendruckwalze sind im Gleichlauf oder mit einer Differenzgeschwindigkeit einstellbar. Dadurch kann eine weitere Strukturierung im Auftragen des Klebemittelfilmes beziehungsweise des Klebemittels auf die zumindest eine Substratbahn ermöglicht sein. Beim Gleichlauf wird die auf die Auftragwalze aufgebrachte Applikationsstruktur identisch oder nahezu identisch auf die zumindest eine Substratbahn übertragen. Bei einer Differenzgeschwindigkeit, bei der vorzugsweise die Gegendruckwalze schneller läuft als die Auftragswalze, wird eine Glättung der auf der Auftragwalze vorgesehenen Applikationsstruktur ermöglicht. Je größer die Differenzgeschwindigkeit ist, desto größer wird die Glättung der Struktur und die Dicke der Klebemittelbeschichtung kann verringert werden.

Die Dosiervorrichtung ist gemäß einer vorteilhaften Ausführungsform durch eine mechanische oder elektrische Stellvorrichtung zur Einstellung der unterschiedlichen Bereiche zum Dosierspalt einstellbar. Beispielsweise kann über eine Steuerung der Beschichtungsanlage die Dosiervorrichtung angesteuert werden, so dass während dem Beschichten einer Substratbahn oder Laminieren eines Verbundes aus wenigstens zwei Substratbahnen unterschiedliche Applikationsstrukturen aufgebracht werden können. Somit kann der Dosierspalt als auch die Positionierung der Bereiche einstellbar sein. Die elektrisch ansteuerbare Stellvorrichtung kann vorteilhafterweise auch die Position und Orientierung des Rakels ansteuern, so dass diese während eines Beschichtungs- oder Laminiervorganges veränderbar ist oder sind.

Nach einer weiteren vorteilhaften Ausgestaltung der Erfindung ist vorgesehen, dass die Dosiervorrichtung eine temperierbare Einrichtung umfasst, welche innerhalb, außerhalb oder innerhalb und außerhalb der Dosiervorrichtung vorgesehen ist. Diese kann sowohl zur Kühlung als auch zum Heizen vorgesehen sein, um sowohl kalte Klebemittel als auch Heißklebemittel zu verarbeiten. Beispielsweise kann in der vorzugsweise walzenförmig ausgebildeten Dosiervorrichtung ein oder mehrere Kühl-und/oder Heizelemente vorgesehen sein, welche für die Temperierung der Dosiervorrichtung und somit des zwischen der Dosiervorrichtung und der Auftragwalze gespeicherten Klebemittels vorgesehen sein. Alternativ oder zusätzlich kann vorgesehen sein, dass außerhalb der Dosiervorrichtung eine Heiz- und/oder Kühleinrichtung vorgesehen ist, welche auf die Dosiervorrichtung und/oder das Klebemittel wirkt. Dies kann beispielsweise durch Strahlung erfolgen oder durch unmittelbaren Kontakt der temperierbaren Einrichtung mit der Dosiervorrichtung und dem bevorrateten Klebemittel.

Nach einer weiteren vorteilhaften Ausgestaltung der Dosiervorrichtung ist vorgesehen, dass vor der Auftragswalze in Zuführrichtung der zumindest einen Substratbahn gesehen, eine Führungswalze zugeordnet ist, welche zur Einstellung eines Umschlingungswinkels der Substratbahn an der Auftragswalze vorgesehen ist. Dadurch kann beispielsweise beim Beschichten einer gitterförmigen oder netzförmigen Substratbahn ermöglicht sein, dass diese gitter- oder netzförmige Materialbahn auf einer Seite mit Klebemittel versehen wird und während dem Durchlaufen zwischen der Auftragswalze und der Gegendruckwalze ein Durchdrücken des Klebemittels durch die Substratbahn nicht gegeben ist. Somit kann eine gitterförmige oder netzförmige strukturierte Substratbahn einseitig beschichtet werden, wobei der Spalt zwischen der Auftragswalze und der Gegendruckwalze derart vorgesehen ist, dass ein Durchdrücken nicht gegeben ist und ggf. eine Glättung des Klebemittels oder der Klebemittelstruktur ermöglicht ist.

Die Dosiervorrichtung weist vorteilhafterweise einen Außenflächenbereich auf, der Teile eines Walzenumfangs ist. Dadurch ist eine kostengünstige Ausgestaltung der Dosiervorrichtung gegeben.

Die Dosiervorrichtung weist in dem zumindest einen Bereich vorteilhafterweise ein Rakel auf, welches lösbar in der Auftragswalze vorgesehen ist. Durch ein derartiges Rakel kann eine Einstellung der Dosierbreite vorgesehen sein, in dem das Rakel mehr oder weniger über die benachbarte Umfangsfläche des Körpers hinausragt.

Nach einer weiteren vorteilhaften Ausgestaltung der Erfindung ist vorgesehen, dass die Rakel rechtwinklig oder in einem Winkel größer oder kleiner 90° gegen die Umfangsfläche der Auftragswalze gerichtet sind. Die Rakel können somit in einer neutralen, positiven oder negativen Stellung angeordnet werden.

Unter der neutralen Stellung ist beispielsweise die radiale Ausrichtung zur Längsmittelachse vorgesehen. Eine positive Rakelstellung zum Dosierspalt beziehungsweise zur Auftragswalze umfasst eine Winkelposition, bei der das Rakel eine Abstreiferfunktion einnimmt. Unter einer negativen Rakelstellung ist eine Winkelposition des Rakels zum Dosierspalt beziehungsweise zur Auftragswalze zu verstehen, bei der eine schneidende Wirkung vorgesehen ist. Durch die Positionierung des Rakels im Dosierspalt kann vorteilhafterweise ebenfalls die Breite des Dosierspaltes einstellbar sein.

Die Dosiervorrichtung weist bevorzugt über den Umfang des zumindest teilweisen walzenförmigen Körper gleichmäßig verteilt die zumindest zwei Bereiche auf. Dadurch können zwischen den Bereichen größtmögliche Abstände geschaffen werden. Alternativ kann auch eine ungleiche Teilung oder ungleich beabstandete Anordnung der Bereiche vorgesehen sein.

Die Dosiervorrichtung weist bevorzugt zur Aufnahme von zumindest einem Rakel eine schnell lösbare Befestigung auf, so dass ein schneller Austausch ermöglicht ist, wodurch wiederum die Stillstandzeiten der Beschichtungsanlage verringert werden.

Vorteilhafterweise ist des weiteren vorgesehen, dass bei der Anordnung von einem oder mehreren Rakeln die jeweilige Winkelposition mechanisch, beispielsweise durch eine schnell lösbare Befestigung, oder elektrisch, beispielsweise durch einen Stellmechanismus, einzeln oder gemeinsam ansteuerbar sind.

Die Aufgabe wird erfindungsgemäß durch eine Vorrichtung zum Auftragen von Klebemitteln auf eine oder mehrere Substratbahnen, insbesondere zum Laminieren, gelöst, die eine Auftragswalze umfasst, die eine Gegendruckwalze, die die Substratbahn gegenüber der Auftragswalze trägt, zugeordnet ist und eine Dosiervorrichtung gemäß einem der Ansprüche 1 bis 16 umfasst. Dadurch ist die Flexibilität einer Beschichtungsanlage erhöht, und die Einstell- und Umrüstzeiten werden minimiert. Ein schneller Wechsel von unterschiedlichen Beschichtungs- und Laminieraufgaben können durchgeführt werden, wodurch die Maschinenauslastung erhöht ist.

Die Erfindung sowie weitere vorteilhafte Ausführungsformen und Weiterbildungen derselben werden im folgenden anhand dem in der Zeichnung dargestellten Beispiel näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1: eine schematische Seitenansicht einer Mehrzweckbeschichtungs- und Laminieranlage,
- Figur 2: eine schematische Darstellung der Vorrichtung zum Beschichten oder Laminieren von zumindest einer Substratbahn,
- Figur 3: eine schematische Ansicht des Details X gemäß Figur 2,
- Figur 4: eine weitere schematische Darstellung der Vorrichtung in einer alternativen Positionierung der Dosiervorrichtung zum Beschichten oder Laminieren von zumindest einer Substratbahn,
- Figur 5: eine schematische Ansicht des Details Y gemäß Figur 4,
- Figur 6: eine weitere schematische Darstellung der Vorrichtung in einer alternativen Positionierung der Dosiervorrichtung zum Beschichten oder Laminieren von zumindest einer Substratbahn,
- Figur 7: eine schematische Ansicht des Details Z gemäß Figur 6,
- Figur 8: eine schematische Darstellung der Vorrichtung mit einer zusätzlichen Führungswalze und
- Figur 9: eine schematische Teilansicht eines Rakels.

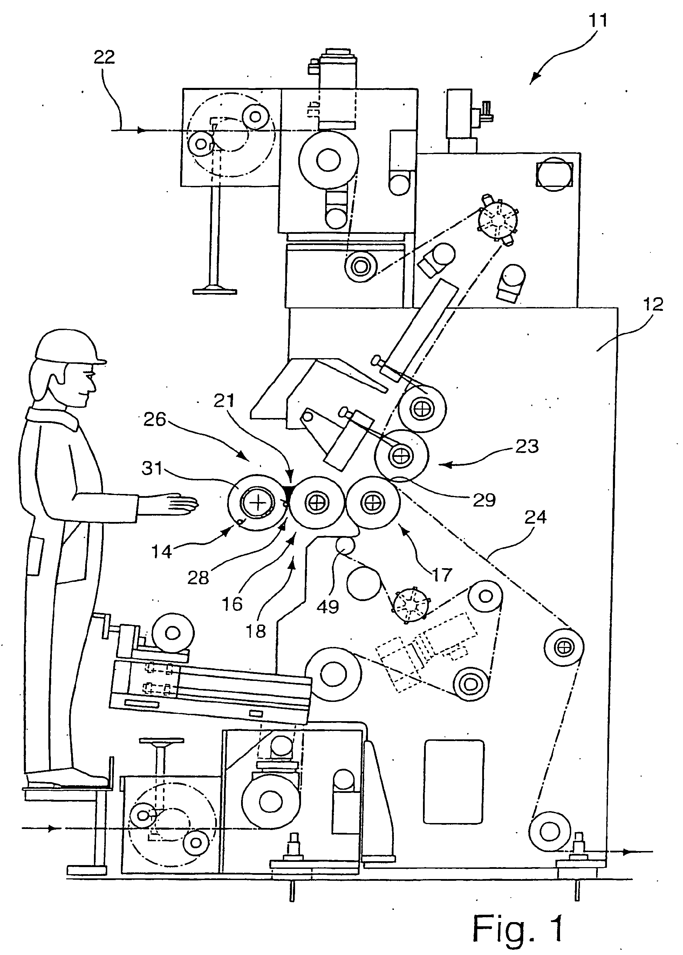

In Figur 1 ist eine schematische Seitenansicht einer Beschichtungs- und Laminieranlage 11 dargestellt. An einem Maschinengestell 12 ist eine Dosiervorrichtung 14, eine Auftragswalze 16 und eine Gegendruckwalze oder getriebene Walze 17 vorgesehen. Diese bilden ein Mehrwalzensystem 18, welche zum Beschichten von Substratbahnen 19 mit einem Klebemittel 21 eingesetzt werden.

Im Ausführungsbeispiel wird die Substratbahn 19 mit einem Klebemittel 21 beschichtet. Anschließend wird eine Substratbahn 22 über eine oder mehrere Walzen einer Laminierwalze 23 zugeführt, welche der Gegendruckwalze 17 zugeordnet ist, so dass die Substratbahn 22 auf die mit Klebemittel 21 versehene Substratbahn 19 laminiert wird. Dieses gebildete Laminat 24 wird aus der Beschichtungs- und Laminieranlage 11 zur Weiterverarbeitung oder Bevorratung herausgeführt. Das gebildete Laminat 24 kann aus zwei oder mehreren Substratbahnen oder Beschichtungen bestehen.

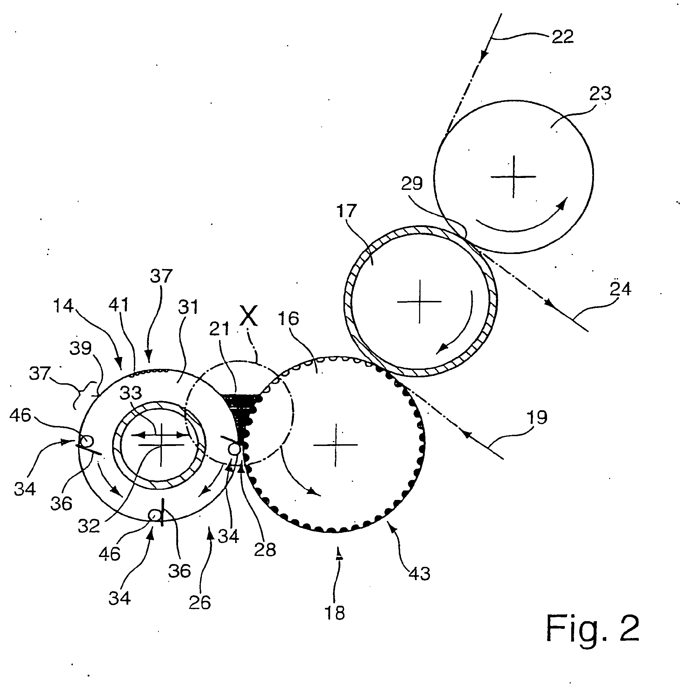

In Figur 2 ist eine schematische Darstellung einer erfindungsgemäßen Vorrichtung 26 sowie der erfindungsgemäßen Dosiervorrichtung 14 dargestellt. Die Dosiervorrichtung 14 ist beispielsweise auf gleicher Ebene mit der Auftragswalze 16 angeordnet. Zwischen der Dosiervorrichtung 14 und der Auftragswalze 16 ist ein Dosierspalt 28 ausgebildet, über den Klebemittel 21 auf die Auftragswalze 16 aufgetragen wird. Oberhalb des Dosierspaltes 28 ist das Klebemittel 21 bevorratet. Nach dem Auftragen des Klebemittels 21 auf die Auftragswalze 16 wird das Klebemittel 21 auf eine Seite der Substratbahn 19 aufgetragen. Hierfür ist zwischen der Auftragswalze 16 und der Gegenwalze 17 ein Spalt ausgebildet, dem die Substratbahn 19 zugeführt wird. Sofern nur eine Beschichtung vorgesehen ist, kann die beschichtete Substratbahn 19 zur Weiterverarbeitung oder Bevorratung abgeführt werden. Im vorliegenden Ausführungsbeispiel wird die Substratbahn 19 mit ihrer mit Klebemittel 21 beschichteten Außenseite um 180° an der Gegendruckwalze 17 umgelenkt und die Substratbahn 22 wird zugeführt, so dass in einem Laminierpunkt 29 das Laminat 24 gebildet wird.

Die Dosiervorrichtung 14 steht während eines Beschichtungs- oder Laminiervorganges still. Die Auftragwalze 16, Gegendruckwalze 17 und Laminierwalze 23 werden gemäß der Pfeilrichtung gedreht. Diese Walzen können eigenständig angetrieben oder getrieben werden.

Der Begriff Substratbahn ist im weiten Sinne zu verstehen und umfasst Gewebe, Gewirke, Webware, Strickware, Schlingenware, nicht gewebte Materialien, atmungsaktive Materialien, sonstige Textilien, Schaumstrukturen, Fasergewebe, Vliese oder dergleichen. Hierbei kann es sich nicht nur um ein einlagiges Material, sondern auch um ein mehrlagiges Verbundmaterial oder bereits hergestelltes Laminat handeln, welches mit einem oder mehreren weiteren Substratbahnen zu einem neuen Laminat verbunden wird.

Zum Einsatz in derartigen Beschichtungs- und Laminieranlagen 11 kommen verschiedenartige Klebemittel 21. Hierbei handelt es sich zumeist um thermoplastische Klebemittel, welche die Eigenschaft aufweisen, dass diese oberhalb eines Erweichungs- oder Schmelzpunktes eine Verbindung mit weiteren Materialien eingehen. Des weiteren können auch sogenannte Kaltklebemittel 21 vorgesehen sein. Die Klebemittel können ebenfalls hoch- oder niederviskos sein.

Zur Herstellung einer Klebemittelbeschichtung oder eines Laminats werden des weiteren unterschiedliche Applizierstrukturen des Klebemittels 21 gewünscht. Zum Auftrag unterschiedlicher Applizierstrukturen kann die Dosiervorrichtung 14 und/oder die Auftragswalze 16 entsprechende Strukturen und Oberflächen aufweisen. Die Dosiervorrichtung 14 besteht zumindest teilweise aus einem walzenförmigen Körper 31, der um eine Längsachse 32 drehbar gelagert ist. Des weiteren ist die Längsachse 32 entlang dem Pfeil 33 verschiebbar angeordnet, wobei die Rotation und die Verschiebbarkeit sich überlagern können. Durch die Verschiebbarkeit gemäß Pfeil 33 wird die Spaltbreite des Dosierspaltes 28 voreingestellt oder eingestellt. Durch die Drehung des Körpers 31 der Dosiervorrichtung 14 erfolgt eine Einstellung der Dosiervorrichtung 14 auf verschiedene Applizierstrukturen. In einem ersten Bereich 34 der Dosiervorrichtung 14 ist ein Rakel 36 vorgesehen, welches gemäß dem Ausführungsbeispiel dem Dosierspalt 28 zugeordnet ist. Des weiteren weist die Dosiervorrichtung 14 zwei weitere Rakel 36 auf sowie zwei weitere Bereiche 37, welche an einer Umfangswand oder einem Umfangswandabschnitt 38 des Körpers 31 ausgebildet sind. Die weiteren Bereiche 37 umfassen eine glatte Oberflächenstruktur 39 sowie eine strukturierte Oberfläche 41. Die Dosiervorrichtung 14 ist beispielhaft als walzenförmiger Körper 31 ausgebildet. Andere Körperformen, welche zumindest einen ersten Bereich 34 und zumindest einen weiteren Bereich 37 aufweisen sind ebenfalls als Körper 31 möglich.

Die Auftragswalze 16 weist gemäß Figur 2 beispielsweise eine punktförmige Struktur 43 auf, welche das Klebemittel 21 aufnimmt und auf die Substratbahn 19 überträgt.

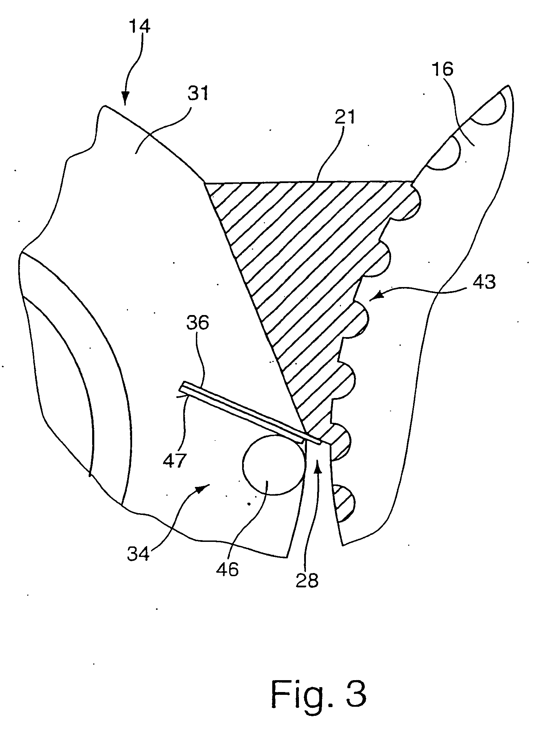

Der Dosierspalt 28 wie die Anordnung des Rakel 36 gemäß dem Detail X in Figur 2 ist in Figur 3 vergrößert dargestellt. Das Rakel 36 ist über eine schnell lösbare Befestigung 46, vorzugsweise eines Exzenterspanners, befestigt. Durch diese lösbare Befestigung 46 kann das Rakel 36 mehr oder weniger in einen Spalt 47 eintauchen und somit auf eine entsprechende Dosierbreite eingestellt werden. In dieser Positivstellung weist das Rakel 36 eine Abstreiferfunktion auf. Das Klebemittel 21 wird in die Struktur 43 der Auftragswalze 16 eingebracht, wobei die benachbarten Umfangsfläche frei von Klebemittel 21 gehalten werden. Somit kann eine offenporige oder eine luftdurchlässige Beschichtungsstruktur auf die Substratbahn 19 aufgetragen werden. Bevorzugt wird die Rotationsgeschwindigkeit der Gegendruckwalze 17 gleichlaufend zur Auftragwalze 16 eingestellt, so dass die Beschichtung der Substratbahn 19 im wesentlichen die Struktur 43 der Auftragswalze 16 umfasst.

Die in Figur 3 dargestellte Rakeleinstellung wird bevorzugt für thermoplastische Kleber und PUR(Polyurethan)-Kleber verwendet, die sowohl hochviskos als auch niederviskos sein können.

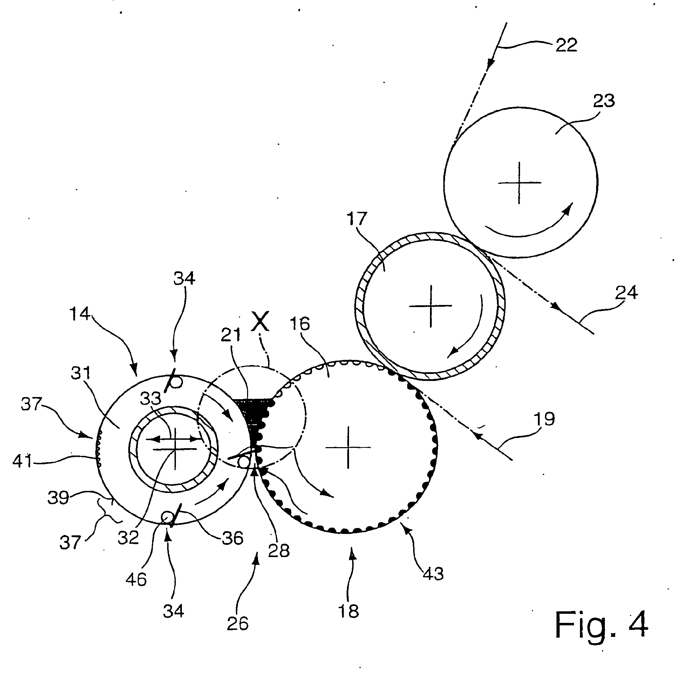

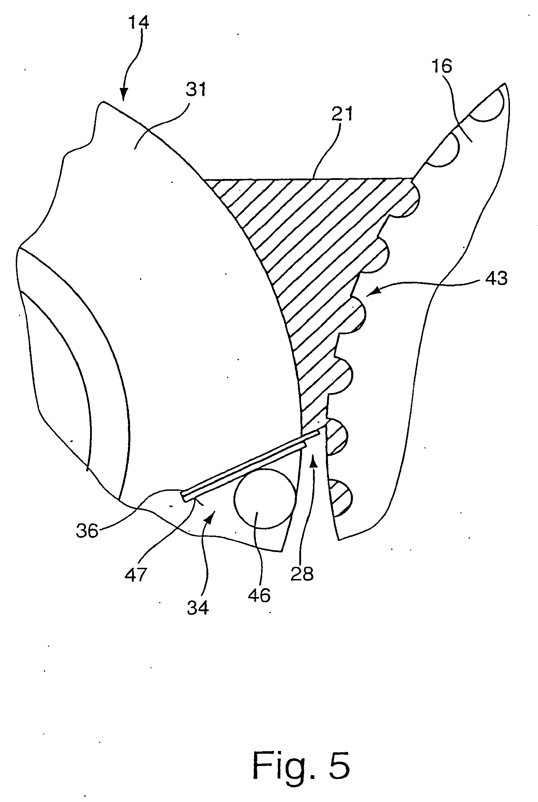

In Figur 4 ist die Dosiervorrichtung 14 in einer zu Figur 2 abweichenden Position angeordnet. Aus Figur 5 geht die vergrößerte Darstellung des Details Y in Figur 4 hervor, aus der die Positionierung des Rakels 36 besser ersichtlich ist. Das Rakel 36 ist in einer negativen Position angeordnet. Es ist somit eine Art schneidende Anordnung gegeben, welche ermöglicht, dass das Klebemittel in der Struktur 43 der Auftragswalze 16 verbleibt, wohingegen die benachbarte Umfangswand von der Auftragswalze 16 frei von Klebemittel 21 gehalten wird. Diese Stellung wird bevorzugt für PUR-Klebstoffe, insbesondere niederviskose PUR-Klebstoffe gewählt.

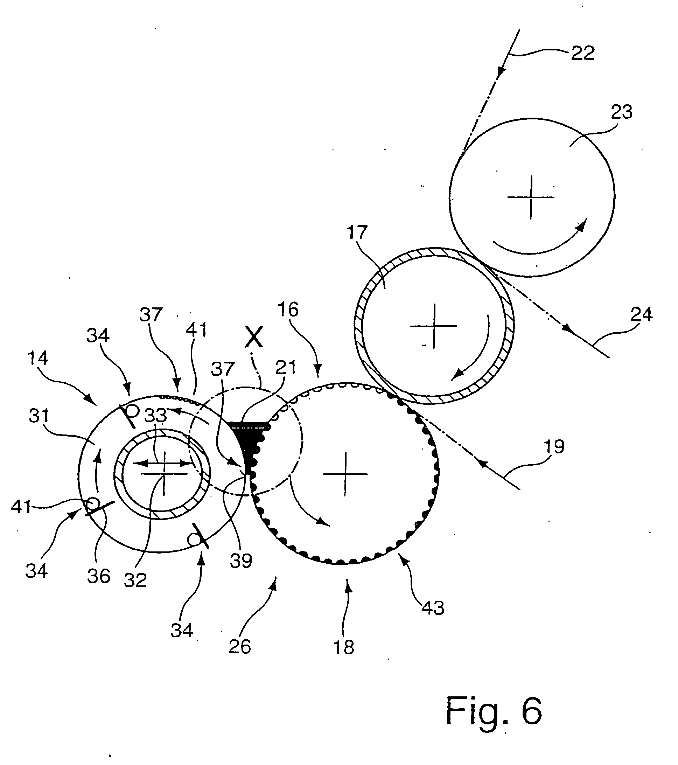

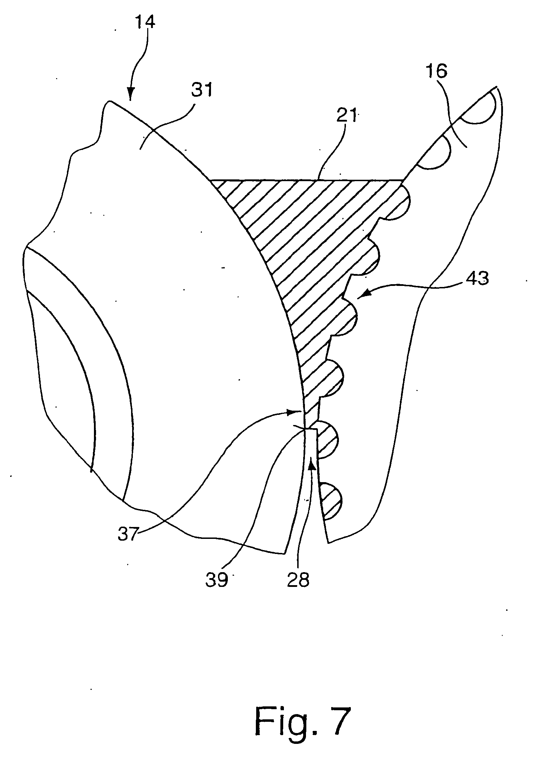

In Figur 6 ist eine weitere Positionierung der Dosiervorrichtung 14 dargestellt, bei der der zumindest eine weitere Bereich 37 dem Dosierspalt 28 zugeordnet ist. In Figur 7 ist das Detail Z gemäß Figur 6 vergrößert dargestellt. Durch diese Anordnung wird ein Klebemittelfilm entsprechend der Stärke des eingestellten Dosierspaltes 28 abgegeben, welcher durch die Struktur 43 der Auftragswalze 16 überlagert ist. Somit wird auf die Substratbahn 19 eine vollflächige Beschichtung aufgetragen, welche auf der Oberseite eine punktförmige Struktur aufweist.

Beim Gleichlauf der Auftragwalze 16 und Gegenwalze 17 bleibt diese Struktur des Klebemittel 21 auf der Substratbahn 19 erhalten. Über die Differenzgeschwindigkeit der Gegendruckwalze 17 zur Auftragswalze 16, wobei die Gegendruckwalze 17 die höhere Geschwindigkeit aufweist, wird zumindest die durch die Auftragswalze 16 gebildete Struktur 43 des Klebemittel 21 geglättet. Je größer die Differenzgeschwindigkeit ist, desto glatter wird die Struktur. Zusätzlich kann auch eine Verringerung der Klebemittelschicht gegeben sein.

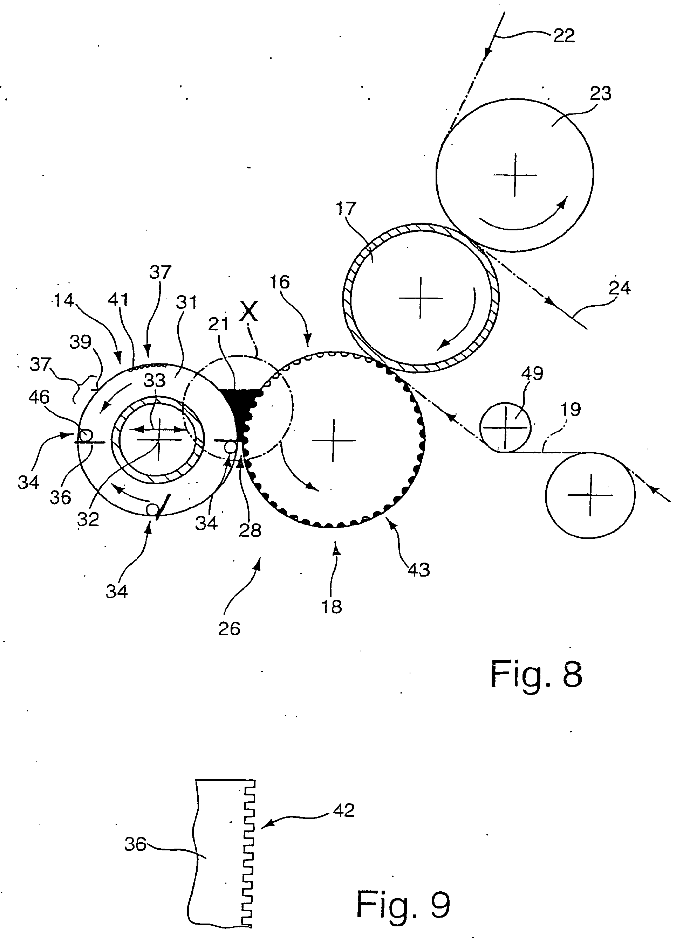

In Figur 8 ist eine weitere Anordnung der erfindungsgemäßen Vorrichtung 26 und Dosiervorrichtung 14 dargestellt. Die Zuführung der Substratbahn 19 zum Spalt zwischen der Auftragswalze 16 und der Gegendruckwalze 17 erfolgt zumindest über eine Führungsrolle 49. Durch diese Führungsrolle 49 kann ein Anliegen der Substratbahn 19 an der Auftragswalze 16 vor Zuführung zum Spalt zwischen der Auftragswalze 16 und der Gegendruckwalze 17 bestimmt werden. Diese Anordnung wird insbesondere bei stark strukturierten Materialien verwendet. Dadurch wird eine Seite der Substratbahn 19 mit Klebemittel 21 beschichtet und die Gegendruckwalze 17 kann auf Spalt zur Auftragswalze 16 eingestellt werden, wodurch erzielt wird, dass ein Klebemitteldurchschlag zur Gegendruckwalze nicht gegeben ist.

In Figur 9 ist beispielhaft ein Abschnitt eines Rakel 36 ausgebildet, welches eine strukturierte Abziehkante 42, beispielsweise eine Zahnreihe aufweist, deren Geometrie, Form und Tiefe der Zähne wahlweise ausgebildet wird. Alternativ kann vorgesehen sein, dass das Rakel eine zumindest abschnittsweise durchgehende Abziehkante umfasst.

Die Dosiervorrichtung 14 ist durch die Drehung um deren Längsachse 32 auf unterschiedliche Klebemittel und Applizierstrukturen einstellbar. Zusätzlich können durch den Einsatz von verschiedenen Rakeln 36 und/oder deren verschiedenen Positionen verschiedene Applikationsstrukturen auf die Auftragswalze 16 aufgebracht werden, welche wiederum in Abhängigkeit der Verfahrgeschwindigkeiten von der Auftragswalze 16 und Gegendruckwalze 17 variiert werden können.

Des weiteren kann die Dosiervorrichtung 14 Bereiche aufweisen, in welchen Segmente einsetzbar sind, die unterschiedliche Oberflächenstrukturen aufweisen. Beispielsweise kann ohne ein Auswechseln der Dosiervorrichtung 14 ein Bereich 37 durch einen anderen Bereich 37 ersetzt werden, indem der weiteren Bereich 37 nicht unmittelbar auf den Körper 31 der Dosiervorrichtung 14 aufgebracht ist, sondern durch Segmente austauschbar von dem Körper 31 aufgenommen sind. Die Segmente können durch benachbarte Klemmvorrichtungen befestigt werden. Derartige Kreissegmente können als sogenannte Klischees ausgebildet werden, so dass durch Herstellung mehrerer Arten von Klischees eine schnelle Umrüstung gegeben ist. Diese Klischees können sich über die Länge der Dosiervorrichtung 14 erstrecken oder aus mehreren Elementen bestehen.

## Patentansprüche

1. Dosiervorrichtung (14), die so an eine Auftragswalze (16) angeordnet ist, dass zwischen beiden (14, 16) ein Klebemittelsumpf (21) ausgebildet ist und dass zwischen der Dosiervorrichtung (14) und der Auftragswalze (16) ein Dosierspalt (28) ausgebildet ist und die Dosiervorrichtung (14) einen ersten, dem Dosierspalt (28) zugeordneten Bereich (34) mit einem Rakel (36) aufweist, **dadurch gekennzeichnet, dass** die Dosiervorrichtung (14) zumindest einen weiteren, von dem ersten Bereich (34) abweichenden und getrennt dazu angeordneten Bereich (37) zur Bildung eines Dosierspaltes (28) aufweist, und dass die unterschiedlich ausgestalteten Bereiche (34, 37) durch Drehen der Dosiervorrichtung (14) auswählbar und zur Auftragswalze (16) hin ausrichtbar sind.

2. Dosiervorrichtung nach Anspruch 1, **dadurch gekennzeichnet, dass** zumindest ein weiterer Bereich (37) als Außenflächenbereich ausgebildet ist.

3. Dosiervorrichtung nach einem der vorhergehenden Ansprüche, **dadurch gekennzeichnet, dass** die Kante der Rakel (36), der Außenflächenbereich (37) und die Oberfläche der Auftragswalze (16) wahlweise glatt oder strukturiert ausgebildet sind.

4. Dosiervorrichtung nach einem der vorhergehenden Ansprüche, **dadurch gekennzeichnet, dass** die ausgewählten Bereiche (34, 37) der Dosiervorrichtung (14) mittels einer mechanischen oder elektrischen Stellvorrichtung zur Auftragswalze (16) hin angeordnet werden.

5. Dosiervorrichtung nach einem der vorhergehenden Ansprüche, **dadurch gekennzeichnet, dass** innerhalb, außerhalb oder Innerhalb und außerhalb eines walzenförmigen Körpers (31) der Dosiervorrichtung (14) eine temperierbare Einrichtung angeordnet ist.

6. Dosiervorrichtung nach Anspruch 2, **dadurch gekennzeichnet, dass** der Außenflächenbereich (37) Teil eines Walzenwandabschnittes ist.

7. Dosiervorrichtung nach Anspruch 1, **dadurch gekennzeichnet, dass** die Rakel (36) auf eine Dosierspaltbreite einstellbar sind.

8. Dosiervorrichtung nach Anspruch 1, **dadurch gekennzeichnet, dass** die Rakel (36) rechtwinklig oder in einem Winkel größer oder kleiner 90 Grad gegen die Umfangsfläche der Auftragswalze (16) gerichtet sind.

9. Dosiervorrichtung nach Anspruch 1, **dadurch gekennzeichnet, dass** die Rakel (36) durch eine schnell lösbare Befestigung, insbesondere mit Exzenterspannung, am Körper (31) befestigt ist.

10. Dosiervorrichtung nach Anspruch 1, **dadurch gekennzeichnet, dass** ihre verschiedenen Bereiche (34, 37) über ihren Umfang gleichmäßig verteilt sind.

11. Dosiervorrichtung nach Anspruch 1, **dadurch** gekehnzeichnet, dass eine Winkelposition des Rakels (36) durch eine schnell lösbare Befestigung einstellbar ist.

12. Dosiervorrichtung nach Anspruch 1, **dadurch gekennzeichnet, dass** ein Anstellwinkel der Rakel (36) mechanisch oder elektrisch angetrieben einstellbar ist.

13. Vorrichtung zum Auftragen von Klebemitteln auf eine oder mehrere Substratbahnen, insbesondere zum Laminieren,
- mit einer Auftragswalze (16), die eine glatte oder strukturierte Oberfläche aufweist,
- mit einer der Auftragswalze (16) zugeordneten Dosiervorrichtung (14) gemäß einem der Ansprüche 1 bis 12 und
- mit einer Gegendruckwalze (17), die eine Substratbahn (22), auf die aufzutragen ist, gegenüber der Auftragswalze (16) trägt.

## Claims

1. Dosing device (14) that is arranged on an application roller (16) such that between the two (14, 16) an adhesive sump (21) is provided, and that a dosing gap (28) is provided between the dosing device (14) and the application roller (16) and comprises a first area (34) directed to the dosing gap (36) having a doctor blade (36) **characterized in that** the dosing device (14) comprises at least one further area (37) which differs from the first area (34) for creating a dosing gap (28) and that the areas (34, 37) that differ from each other are selected by rotating the dosing device (14) and are oriented towards the application roller (16).

2. Dosing device according to claim 1, **characterized in that** at least one further area (37) is provided as external surface area.

3. Dosing device according to any of the preceding claims, **characterized in that** the edge of the doctor blades (36), the external surface area (37), and the surface of the application roller (16) are optionally provided to be smooth or structured.

4. Dosing device according to any of the preceding claims, **characterized in that** the selected areas (34, 37) of the dosing device (14) are arranged towards the application roller (16) by means of a mechanical or electrical controller device.

5. Dosing device according to any of the preceding claims, **characterized in that** a temperature-controlled facility is arranged inside, outside or inside and outside of a roller-shaped body (31) of the dosing device (14).

6. Dosing device according to claim 2, **characterized in that** the external surface area (37) is part of a roller wall section.

7. Dosing device according to claim 1, **characterized in that** the doctor blades (36) are adjusted to a dosing gap width.

8. Dosing device according to claim 1, **characterized in that** the doctor blades (36) are directed at a right angle or at an angle larger or smaller than 90° with respect to the circumferential surface of the application roller (16).

9. Dosing device according to claim 1, **characterized in that** the doctor blades (36) are connected to the body (31) by means of a rapidly detachable connection, in particular by means of a lever-actuated eccentric clamp.

10. Dosing device according to claim 1, **characterized in that** its different areas (34, 37) are evenly distributed over its circumference.

11. Dosing device according to claim 1, **characterized in that** an angle position of the doctor blade (36) is adjustable by means of a rapidly detachable connection.

12. Dosing device according to claim 1, **characterized in that** a set angle of the doctor blades (36) are adjusted either in a mechanical or electrical fashion.

13. Device for the application of adhesives to one or more substrate webs, in particular for laminating,
- with an application roller (16) comprising a smooth or structured surface;
- with a dosing device (14) according to any one of the claims 1 to 16 that is allocated to the application roller (16), and
- with a counter pressure roller (17) that carries, opposite to the application roller (16), a substrate web (22) onto which an application is to be made.

## Revendications

1. Dispositif doseur (14), qui est disposé sur un rouleau d'application (16) de façon à former un bain d'adhésif (21) entre les deux (14, 16) et de telle manière qu'il se forme un intervalle de dosage (28) entre le dispositif doseur (14) et le rouleau d'application (16) et que le dispositif doseur (14) présente une première zone (34) avec un racloir (36) associée à l'intervalle de dosage (28), **caractérisé en ce que** le dispositif doseur (14) comprend au moins une autre zone (37) différente de la première zone (34) et disposée séparément de celle-ci pour former un intervalle de dosage (28), et **en ce que** les zones (34, 37) configurées différemment peuvent être sélectionnées et peuvent être dirigées vers le rouleau d'application (16) en faisant tourner le dispositif doseur (14).

2. Dispositif doseur selon la revendication 1, **caractérisé en ce qu'**au moins une autre zone (37) est une zone de surface extérieure.

3. Dispositif doseur selon l'une quelconque des revendications précédentes, **caractérisé en ce que** l'arête du racloir (36), la zone de surface extérieure (37) et la surface du rouleau d'application (16) sont au choix lisses ou structurées.

4. Dispositif doseur selon l'une quelconque des revendications précédentes, **caractérisé en ce que** les zones sélectionnées (34, 37) du dispositif doseur (14) sont disposées en direction du rouleau d'application (16) au moyen d'un dispositif de commande mécanique ou électrique.

5. Dispositif doseur selon l'une quelconque des revendications précédentes, **caractérisé en ce qu'**un dispositif pouvant être tempéré est disposé à l'intérieur, à l'extérieur ou à l'intérieur et à l'extérieur d'un corps en forme de rouleau (31) du dispositif doseur (14).

6. Dispositif doseur selon la revendication 2, **caractérisé en ce que** la zone de surface extérieure (37) fait partie d'une portion de la paroi du rouleau.

7. Dispositif doseur selon la revendication 1, **caractérisé en ce que** le racloir (36) est réglable à une largeur d'intervalle de dosage.

8. Dispositif doseur selon la revendication 1, **caractérisé en ce que** le racloir (36) est orienté vers la surface périphérique du rouleau d'application (16) perpendiculairement, sous un angle plus grand ou sous un angle plus petit que 90°.

9. Dispositif doseur selon la revendication 1, **caractérisé en ce que** le racloir (36) est fixé sur le corps (31) par une fixation à desserrage rapide, en particulier par un serrage à excentrique.

10. Dispositif doseur selon la revendication 1, **caractérisé en ce que** ses différentes zones (34, 37) sont réparties uniformément sur sa périphérie.

11. Dispositif doseur selon la revendication 1, **caractérisé en ce qu'**une position angulaire du racloir (36) est réglable par une fixation à desserrage rapide.

12. Dispositif doseur selon la revendication 1, **caractérisé en ce qu'**un angle d'approche du racloir (36) est réglable par un entraînement mécanique ou électrique.

13. Dispositif pour appliquer des adhésifs sur une ou plusieurs bandes de substrat, en particulier pour le contrecollage,
- avec un rouleau d'application (16), qui présente une surface lisse ou structurée,
- avec un dispositif doseur (14) selon l'une quelconque des revendications 1 à 12, associé au rouleau d'application (16), et
- avec un rouleau de contre-pression (17), qui porte, en face du rouleau d'application (16), une bande de substrat (22) sur laquelle il faut effectuer l'application.
